# EUROPEAN PATENT SPECIFICATION

(11) **EP 4 039 407 B1**
(45) Date of publication and mention of the grant of the patent: **29.04.2026**
(21) Application number: 19947608.6
(22) Date of filing: 30.09.2019
(51) Int. Cl.: B23Q 3/157, B23Q 3/155

(54) **TOOL MAGAZINE**
WERKZEUGMAGAZIN
MAGASIN D'OUTILS

(43) Date of publication of application: 10.08.2022
(73) Proprietor: Mori Machinery Corporation, Akaiwa-shi, Okayama 701-2434 (JP)
(72) Inventor: OE, Jungo, Akaiwa-shi, Okayama 701-2434 (JP); OGURA, Daisuke, Akaiwa-shi, Okayama 701-2434 (JP); NAGAHATA, Kengo, Akaiwa-shi, Okayama 701-2434 (JP); FUJIMOTO, Hiroyuki, Akaiwa-shi, Okayama 701-2434 (JP)
(74) Representative: Herrero & Asociados, S.L.
(86) International application number: PCT/JP2019/038589
(87) International publication number: WO 2021/064813

(56) References cited:
- EP-A1- 3 061 562
- EP-A2- 0 138 600
- WO-A1-2009/104280
- WO-A1-2016/035158
- JP-A- H01 193 136
- JP-A- H04 201 149
- JP-A- S5 170 579
- JP-B1- S 472 835

## Description

### TECHNICAL FIELD

The present disclosure relates to a tool magazine for storing tools for use in a machine tool while keeping a cutting part standing and facing upward.

### BACKGROUND

It is desirable for a tool magazine to be able to store a number of tools in a small installation area and allow an intended tool to be quickly taken out. Patent Literature 1 discloses a tool magazine configured such that it includes a magazine arm configured to turn while a tool is kept hanging, and a tool rack (gripper plate) provided on an arcuate trajectory of the tool moved by the magazine arm, and the tool rack provided with a gripper, which is opened in a tangential direction of the arcuate trajectory of the moving tool (Patent Literature 1, [claim 1]). The gripper is provided with a cantilevered blade spring on at least one end thereof (Patent Literature 1, [claim 6] [claim 7]).

The tool magazine disclosed in Patent Literature 1 is capable of delivering a tool to and from the gripper only by turning the magazine arm. Accordingly, control of the magazine arm can be facilitated, the dimension of the tool magazine in the width direction can be minimized because the grippers can be arranged with the turning magazine arm located in between, limited space in a rack area can be efficiently utilized by adjusting height of and spacing between the tool racks, and tools conforming to various specifications can be accommodated only by changing the shapes of gripped parts of the tools (Patent Literature 1, [0011]).

### Citation List

### Patent Literature

Patent Literature 1: Japanese Patent No. 5658850

The tool magazine disclosed in Patent Literature 1 turns the magazine arm to move the tool arcuately in plane, and causes a V-shaped groove of a circular-ring shape provided on a flange of the holder to engage with an inner circumferential edge of the gripper (Patent Literature 1, [0014] to [0019]). The gripper has an opening of a size equal to or larger than the diameter of the V-shaped groove of the holder, and when the tool is pushed in, elastically deforming the blade spring provided on the end, the blade spring is engaged with the flange of the holder to prevent the tool from falling off. Such a structure in which the gripper has an opening of a size equal to or larger than the diameter of the V-shaped groove of the holder causes a problem in that if the blade spring for preventing falling off is damaged or vibration is applied to such an extent that the blade spring is elastically deformed, the tool may fall off from the tool rack.

Further, the tool magazine disclosed in Patent Literature 1 keeps the tool hanging upside down on the magazine arm and the tool rack, on the assumption that it is adjoined to the machine tool (processing equipment) and delivers the tool directly to and from the machine tool (Patent Literature 1 [0015]). However, from the viewpoint of just storing tools, the tools may not necessarily be upside down. Further, from the viewpoint of just storing tools, a problem with upside down tools is that there is a risk of falling off of the cutting part from the holder, and since the cutting part faces downward, it is difficult to check the cutting part.

As described above, problems with the tool magazine disclosed in Patent Literature 1 have been that the tool may fall off from the tool rack, there is a risk of falling off of the cutting part from the upside-down tool, and it is difficult to check the cutting part of the stored tool. Accordingly, studies have been conducted to develop a tool magazine that meets requirements of having an ability to store a number of tools in a small installation area and allow an intended tool to be quickly taken out, while providing a tool rack with which falling off of the tool is prevented, and that prevents the cutting part from dropping off from the tool as well as facilitates checking of the cutting part of the stored tool.

EP 3 061 562 A1 discloses a tool magazine comprising: a tool rack for holding a tool with a cutting part mounted in a conical holder; and a magazine arm configured to deliver the tool to and from the tool rack, wherein the tool rack includes a gripper, the gripper has a ring-shaped inner circumferential edge that has an opening in an approaching and leaving direction of the tool moved by the magazine arm, a pair of engagement portions are arranged on opposite ends of the inner circumferential edge, the magazine arm includes: a hand configured to grip the holder for the tool in a horizontal direction; approaching and leaving means configured to cause the hand to approach the gripper and leave therefrom; and elevator means configured to move the hand up and down.

### SUMMARY

As a result of the studies, there has been developed a tool magazine including: a tool rack for holding a tool with a cutting part mounted in a conical holder; and a magazine arm configured to deliver the tool to and from the tool rack, wherein the tool rack includes a gripper into which the holder for the tool that keeps the cutting part standing and facing upward is to be fitted from above, the gripper has a ring-shaped inner circumferential edge that has an opening in an approaching and leaving direction of the tool moved by the magazine arm, a pair of engagement portions are arranged on opposite ends of the inner circumferential edge and beyond a half turn of a horizontal section of the holder, and the magazine arm includes: a hand configured to grip the holder for the tool that keeps the cutting part standing and facing upward in a horizontal direction; approaching and leaving means configured to cause the hand to approach the gripper and leave therefrom; and elevator means configured to move the hand up and down.

The inner circumferential edge of the gripper is in a ring shape that has an arcuate or polygonal shape as seen in plan view, and has an opening in the approaching and leaving direction of the tool moved by the magazine arm. The engagement portion is a part that comes into contact with a conical side surface of the holder and is a contacting portion that comes from the inner circumferential edge itself or is attached to the inner circumferential edge. A pair of engagement portions arranged on the opposite ends of the inner circumferential edge are contacting portions that come from the opposite ends of the inner circumferential edge or are arranged on the opposite ends across the opening. For the inner circumferential edge that has an arcuate shape as seen in plan view, the entire circumference is continuously or discontinuously brought into contact with the holder, or contacting portions arranged discontinuously in the circumferential direction are brought into contact with the holder. For the inner circumferential edge that has a polygonal shape as seen in plan view, parts of sides forming the polygon are discontinuously brought into contact with the holder, or contacting portions attached to parts of the sides are discontinuously brought into contact with the holder.

The approaching and leaving means of the magazine arm causes the hand to approach the gripper and leave therefrom in a linear motion or an arc motion. For the approaching and leaving means, a variety of conventionally known means can be utilized, for example, a rack-and-pinion mechanism that converts a rotational power of a servomotor into a linear motion. The elevator means of the magazine arm moves the hand up and down in a linear motion. When the hand holding the tool is located above the gripper, lowering the hand allows the tool to fit into the gripper from above and raising the hand allows the tool to be taken out from the gripper. For the elevator means, a variety of conventionally known means can be utilized, for example, a timing belt mechanism rotated by a rotational power of a servomotor.

The tool magazine of the present disclosure causes the magazine arm to move the tool that keeps the cutting part standing and facing upward immediately above the gripper, and thereafter lower the tool to fit the holder of the tool into the gripper. Since the holder of the tool that is kept standing has a conical shape tapering downward, the holder engages from above with the gripper, into which it is fitted from above. In the gripper, a pair of engagement portions are arranged on opposite ends of the inner circumferential edge and beyond a half turn of a horizontal section of the holder, so that the tool, the holder of which is fitted into the gripper from above, is prevented from falling off. The ring-shaped inner circumferential edge of the gripper is opened in the approaching and leaving direction of the tool moved by the magazine arm, so that the magazine arm can move the holder through the opening and the tool above the gripper by slightly lifting the tool.

Preferably, a pair of the tool racks are arranged with the magazine arm located in between such that openings of the grippers of the respective tool racks face each other, and the magazine arm includes turning means configured to turn the hand toward each of the grippers of the tool rack. The magazine arm is turned by the turning means to direct the hand toward the gripper of any of the pair of the tool racks arranged such that the openings face each other, and thereafter causes the approaching and leaving means to move the hand that is gripping the tool above the gripper, and causes the elevator means to lower the hand to fit the tool into the gripper. For the turning means, a variety of conventionally known means can be utilized, for example, a turning mechanism that turns in response to a rotational power of a servomotor.

Further preferably, the tool rack has a plurality of grippers with openings thereof arranged in the same orientation, and the magazine arm includes moving means configured to move the hand in a lining-up direction of the grippers. The tool rack may have any number of grippers. The magazine arm is moved in the lining-up direction of the grippers by the moving means, and thereafter causes the approaching and leaving means to move the hand that is gripping the tool above the gripper, and causes the elevator means to lower the hand to fit the tool into the gripper. For the moving means, a variety of conventionally known means can be utilized, for example, a timing belt mechanism rotated by a rotational power of a servomotor.

Further preferably, a plurality of the tool racks are arranged in a horizontal direction with the openings of the grippers arranged in the same orientation, and the magazine arm includes moving means configured to move the hand in an arrangement direction of the tool racks. Any number of tool racks may be arranged in the horizontal direction. The tool racks may be different in height in the up-down direction each other, although the grippers may preferably be at the same height. The magazine arm is moved in the lining-up direction of the tool racks by the moving means, and thereafter causes the approaching and leaving means to move the hand that is gripping the tool above the gripper, and causes the elevator means to lower the hand to fit the tool into the gripper. For the moving means, a variety of conventionally known means can be utilized, for example, a timing belt mechanism rotated by a rotational power of a servomotor.

In the similar manner, preferably, a plurality of the tool racks are arranged and spaced apart in the up-down direction with the openings of the grippers arranged in the same orientation, and the magazine arm includes elevator means configured to move the hand up and down in an arrangement direction of the tool racks. Any number of tool racks may be arranged in the up-down direction. For the tool racks, the grippers may be at different horizontal positions each other, although the centers of the grippers may preferably be aligned. The magazine arm is moved up and down in the lining-up direction of the tool racks by the elevator means, and thereafter causes the approaching and leaving means to move the hand that is gripping the tool above the gripper, and causes the elevator means to lower the hand to fit the tool into the gripper. For elevator means, a variety of conventionally known means can be utilized, for example, a timing belt mechanism rotated by a rotational power of a servomotor.

There may be provided a plurality of types of tool racks provided with grippers that have different internal diameters. In this case, the tool rack may be configured such that the grippers are grouped based on different internal diameters, or may be configured such that the grippers that have different internal diameters coexist. The tool racks may preferably be freely exchangeable. In this case, to be exchangeable with each other, it is preferable that the tool racks have the same external dimensions and means for fixing position, and that the openings of the grippers are arranged in the same orientation. In a case in which each tool rack has a plurality of grippers, the openings of the grippers may preferably be arranged in the same orientation.

In the tool magazine of the present disclosure, since the holder for the tool that keeps the cutting part standing and facing upward is fitted into the gripper of the tool rack from above, a portion of the conical holder that has a larger external diameter is engaged with the gripper from above and a risk of dropping off of the tool is avoided. Further, even though the gripper has an opening in the approaching and leaving direction of the tool moved by the magazine arm, a pair of engagement portions are arranged on opposite ends of the inner circumferential edge and beyond a half turn of a horizontal section of the holder, and therefore a risk of the tool escaping from the gripper in the horizontal direction is also avoided. In this way, the tool magazine of the present disclosure prevents the tool from falling off from the tool rack.

Further, since the tool magazine of the present disclosure causes the magazine arm to move the tool that keeps the cutting part standing and facing upward and stores the tool in the tool rack as it is, the cutting part of the tool mounted in the holder from above is prevented from dropping off while it is moved and stored. Further, the tool stored in the tool rack with the cutting part facing upward is easy to check in the cutting part, which provides convenience in that, for example, the tool can easily be identified through a window of a housing in which the tool rack and the magazine arm are accommodated. Further, the tool that is moved while the cutting part is kept standing and facing upward can be delivered between the tool magazine and a tool presetter by using the magazine arm, enabling automatic measurement of the tool by the tool presetter.

By providing the magazine arm with the elevator means, the turning means, and the moving means, the tool magazine of the present disclosure accommodates an increase in the number of stored tools by allowing tool racks that have a plurality of grippers to be arranged in the horizontal direction and the up-down direction, and positioning the tool racks with the magazine arm located in between. This means that the tools can be efficiently stored in a small installation area, and as a result, the tools can quickly be taken out. In this way, the tool magazine of the present disclosure can store a number of tools in a small installation area and meet the requirement of taking out an intended tool quickly.

### BRIEF DESCRIPTION OF THE DRAWINGS

Fig. 1 is a perspective view illustrating an exemplary exterior of a tool magazine to which the present disclosure is applied;
Fig. 2 is a perspective view of the tool magazine of the example with exterior cover plates on a top face, a left side face, and a front face removed;
Fig. 3 is a perspective view illustrating an excerpted major portion of a conveying mechanism provided with a magazine arm;
Fig. 4 is a perspective view of a tool rack with circular-ring-shaped continuous inner circumferential surfaces seen from above;
Fig. 5 is a perspective view of a tool rack with circular-ring-shaped continuous inner circumferential surfaces seen from below;
Fig. 6 is a perspective view of a tool rack with circular-ring-shaped discontinuous inner circumferential surfaces seen from above;
Fig. 7 is a perspective view of a tool rack with circular-ring-shaped discontinuous inner circumferential surfaces seen from below;
Fig. 8 is a perspective view of a tool rack with hexagonal discontinuous inner circumferential surfaces seen from above;
Fig. 9 is a perspective view of a tool rack with hexagonal discontinuous inner circumferential surfaces seen from below;
Fig. 10 is a front view of the tool magazine of the example in which tools to be accommodated are arranged on a delivery rack with exterior cover plates on the top face, the left side face, and the front face removed;
Fig. 11 is an A-A sectional view in Fig. 10;
Fig. 12 is a front view of the tool magazine of the example while a tool to be accommodated is conveyed by the conveying mechanism with exterior cover plates on the top face, the left side face, and the front face removed;
Fig. 13 is a B-B sectional view in Fig. 12;
Fig. 14 is a plan view of the tool magazine of the example while a tool to be accommodated is conveyed by the conveying mechanism with exterior cover plates on the top face, the left side face, and the front face removed;
Fig. 15 is a B-B equivalent sectional view when a tool to be accommodated is moved immediately above a gripper by the conveying mechanism with exterior cover plates on the top face, the left side face, and the front face removed;
Fig. 16 is a plan view of the tool magazine of the example when a tool to be accommodated is moved immediately above a gripper by the conveying mechanism with exterior cover plates on the top face, the left side face, and the front face removed;
Fig. 17 is a front view of the tool magazine of the example when a tool to be accommodated is fitted into a gripper by being lowered by the conveying mechanism with exterior cover plates on the top face, the left side face, and the front face removed;
Fig. 18 is a B-B equivalent sectional view when a tool to be accommodated is fitted into a gripper by being lowered by the conveying mechanism with exterior cover plates on the top face, the left side face, and the front face removed;
Fig. 19 is a plan view of the tool magazine of the example when a tool to be accommodated is fitted into a gripper by being lowered by the conveying mechanism with exterior cover plates on the top face, the left side face, and the front face removed;
Fig. 20 is a B-B equivalent sectional view when the magazine arm is retracted from an accommodated tool with exterior cover plates on the top face, the left side face, and the front face removed; and
Fig. 21 is a plan view of the tool magazine of the example when the magazine arm is retracted from an accommodated tool with exterior cover plates on the top face, the left side face, and the front face removed.

### DETAILED DESCRIPTION OF THE EMBODIMENTS

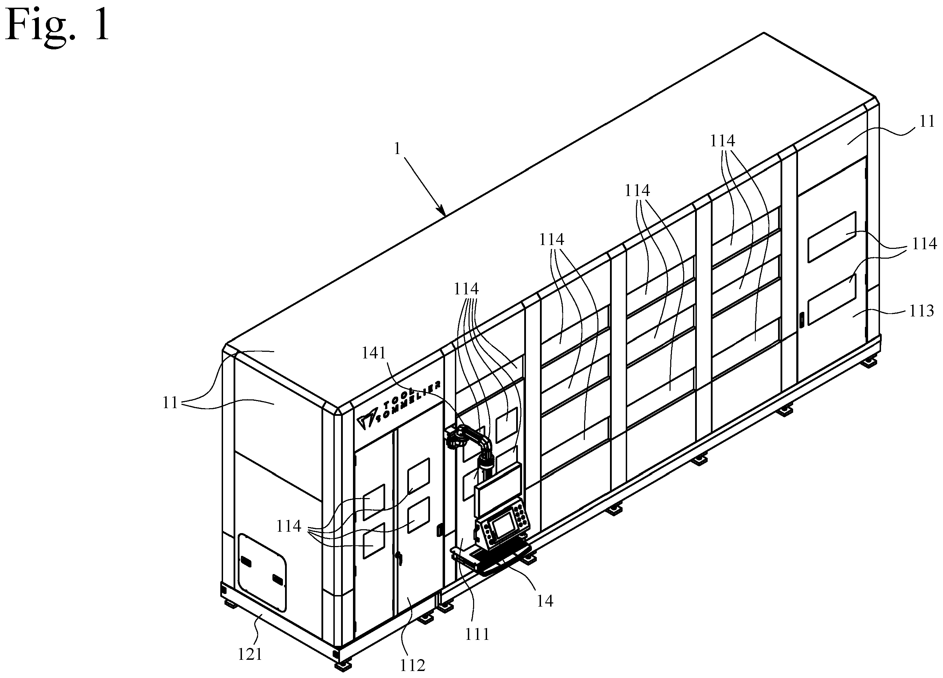

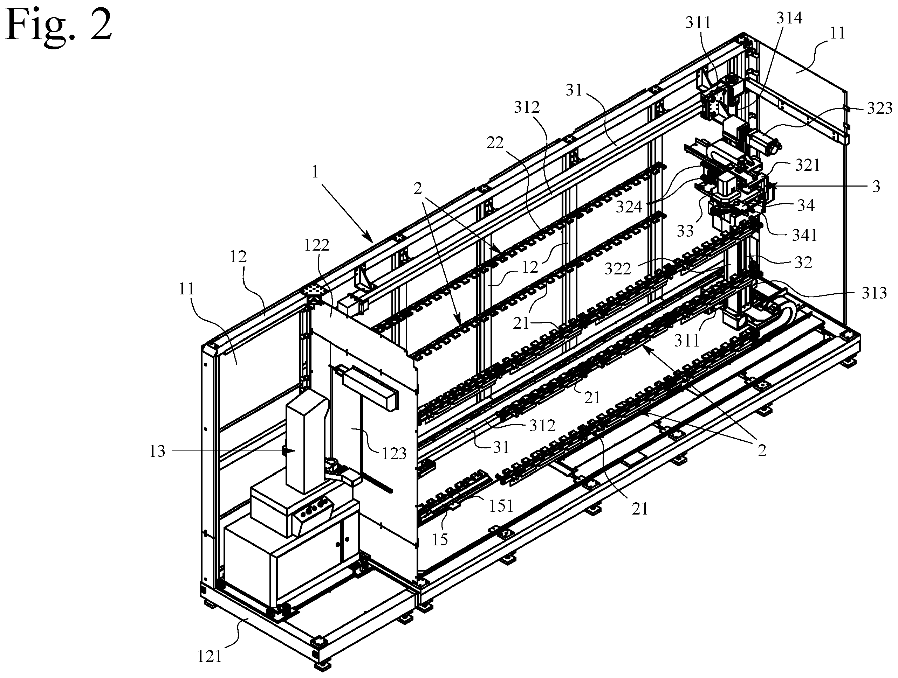

An embodiment of the present disclosure will now be described with reference to drawings. For example, as can be seen in Fig. 1 and Fig. 2, the tool magazine 1 of the present disclosure is configured such that a number of tool racks 2 and a conveying mechanism 3 for a magazine arm 34 are arranged in a rectangular parallelepiped housing surrounded by a number of exterior cover plates 11. In the tool magazine 1 of the example, the housing surrounded by the exterior cover plates 11 is separated into right and left by a partition 122 provided with a partition-opening-and-closing door 123, and a compartment to the right is defined as a tool storage space (back in the right in Fig. 1 and Fig. 2) and a compartment to the left is defined as a tool measurement space (front in the left in Fig. 1 and Fig. 2) where a presetter 13 is located.

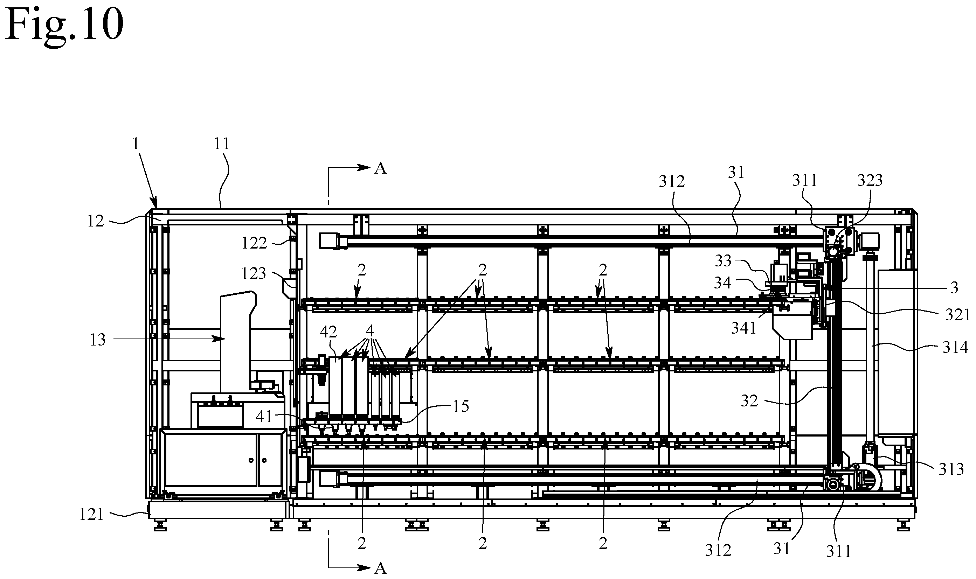

The exterior cover plates 11 shield the tool storage space from the outside such that dust and particulates are prevented from entering the inside. In the tool storage space of the right compartment, a magazine-side door 111 for opening and closing an opening through which a tool 4 (see Fig. 10 and subsequent views below) is to be delivered is provided on a left end and a maintenance door 113 to be opened and closed when the conveying mechanism 3 is to be inspected is provided on a right end. The tool measurement space is provided with a presetter-side door 112 for opening and closing an opening through which the tool is to be delivered to and from the presetter 13. The exterior cover plates 11 on the front face, the magazine-side door 111, the presetter-side door 112, and the maintenance door 113 are provided with observation windows 114 for observing the inside. There may be any shape, number, and position of observation windows 114. The observation windows 114 of the example are rectangular, and positioned and sized along the tool rack 2 such that a top face side of the tool rack 2 can be observed.

The exterior cover plates 11, the magazine-side door 111, the presetter-side door 112, and the maintenance door 113 are removably attached to a frame 12 assembled into rectangular. The frame 12 is formed by laying girders and beams to columns erected on a base 121. The partition 122 is supported by being surrounded by the base 121, the columns, and the beams. The tool racks 2 are installed and fixed between adjacent columns of the frame 12. The conveying mechanism 3 is supported by upper and lower movement rails 31 installed to the right and left along the frame 12 on a back face side. The presetter 13 is mounted and fixed on the base 121.

The conveying mechanism 3 is made up of moving means configured to move the magazine arm 34 in the right-left direction, elevator means configured to move the magazine arm 34 up and down in the up-down direction, turning means configured to turn the magazine arm 34 in a horizontal plane, and approaching and leaving means configured to cause a hand 341 of the magazine arm 34 to approach the tool rack 2 and leave therefrom. The conveying mechanism 3 of the example causes the moving means to move the elevator means, turning means, and the approaching and leaving means integrally, causes the elevator means to move the turning means and the approaching and leaving means up and down integrally, and causes the approaching and leaving means to perform approaching and leaving of the turning means.

The moving means of the magazine arm 34 is formed by attaching a slidable movement block 311 to each of the upper and lower movement rails 31, and connecting a movement timing belt 312 stretched along the movement rail 31 to the movement block 311. The upper and lower movement blocks 311 are moved in the right-left direction by rotating the movement timing belt 312 by a movement servomotor 313. The movement servomotor 313 is fixed on the base 121, and transmits rotational power directly to the lower movement timing belt 312 and through a transmission shaft 314 to the upper movement timing belt 312.

The elevator means of the magazine arm 34 is formed by attaching a slidable elevator block 321 to an elevator rail 32 that connects the upper and lower movement blocks 311 vertically, and connecting an elevator timing belt 322 stretched along the elevator rail 32 with the elevator block 321. The elevator block 321 is moved in the up-down direction by rotating the elevator timing belt 322 by an elevator servomotor 323. The elevator servomotor 323 is supported by the upper movement block 311, and transmits rotational power directly to the elevator timing belt 322. The elevator block 321 is provided with sliders 324 extending in the front-back direction.

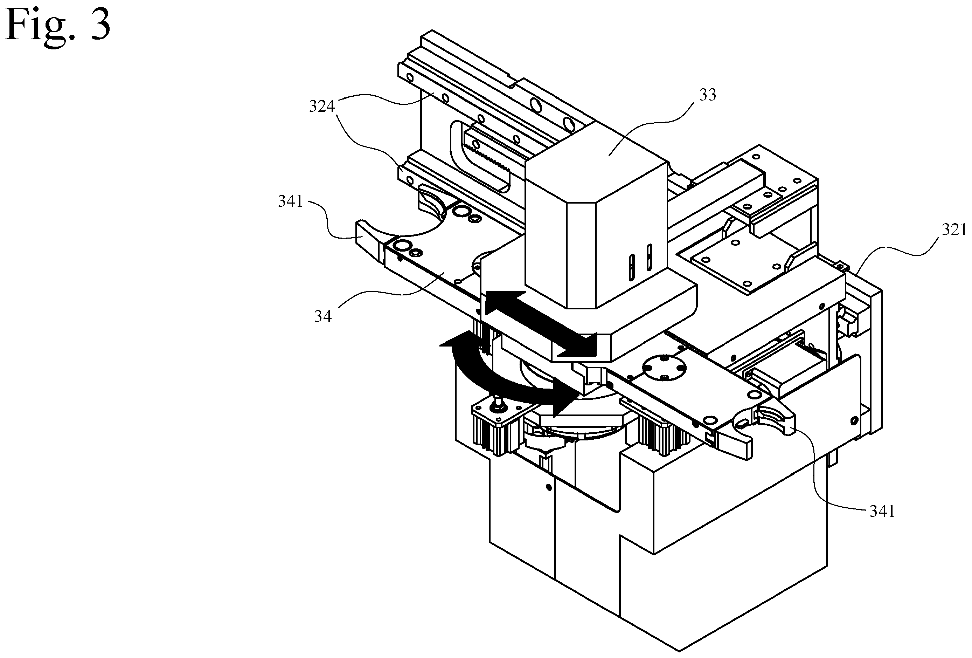

As can be seen in Fig. 3, the approaching and leaving means of the magazine arm 34 is made up of an approaching and leaving block 33 that is supported by the elevator block 321 and movable in the front-back direction. The approaching and leaving block 33 is moved in the front-back direction along the sliders 324 provided on the elevator block 321 by a rack and pinion mechanism including a pinion (not illustrated) that is rotated forward and backward by an incorporated approaching and leaving servomotor (not illustrated) and a rack (not illustrated) provided on the elevator block 321. The turning means of the magazine arm 34 is a turning servomotor (not illustrated) incorporated in the approaching and leaving block 33.

The magazine arm 34 extends in the 180-degree direction around a pivot of the turning servomotor, which is the turning means, and has a hand 341 for grasping a tool (for example, #40) 4 with a smaller holder 41 on one end and a hand 341 for grasping a tool (for example, #50) 4 with a larger holder 41 on the other end. Depending on types of the tool 4, the number of magazine arms 34 may be increased and three or more hands 341 may be provided. The hand 341 is constituted of a pair of openable and closable levers. The levers are to be replaced according to specifications of the tool 4 to be grasped. When the levers are closed, the hand 341 grips the tool 4 with the levers engaged with a V-shaped groove 412 on a flange 411 of the holder 41 of the tool 4, and when the levers are opened, the levers are loosened from the V-shaped groove 412 on the flange 411 of the holder 41 of the tool 4 to release the tool 4.

The conveying mechanism 3 is controlled from an operation unit 14 attached between the magazine-side door 111 and the presetter-side door 112 of the tool magazine 1. The operation unit 14 includes a display unit (display), a control unit (computer), and an input unit (keyboard), which are integrally supported by the tool magazine 1 via a universal arm 141, so that the orientation and height of the display unit and the input unit can be changed freely. The operation unit 14 of the example operates the conveying mechanism 3 and the presetter 13 to perform shape measurement on the tool 4 received from the magazine-side door 111 by the presetter 13 and thereafter store the tool 4 on the tool rack 2, or operates the presetter 13 only to perform shape measurement on the tool 4 received from the presetter-side door 112.

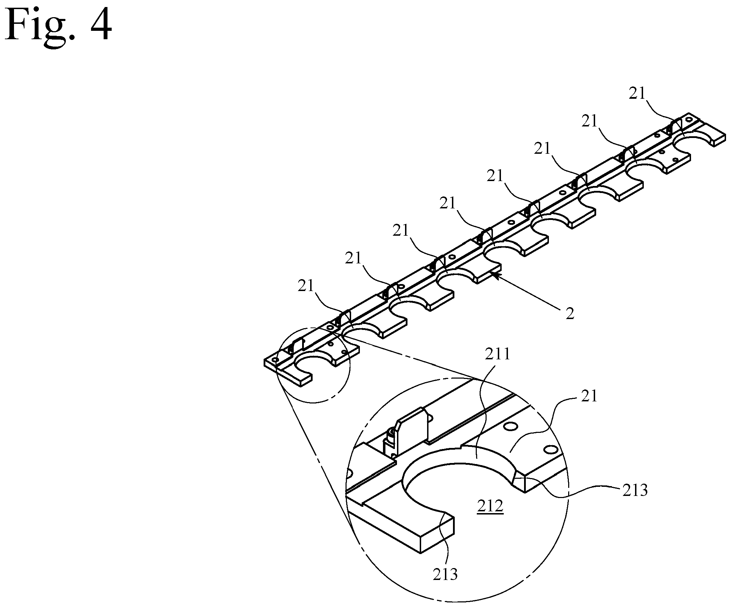

The tool rack 2 has a plurality of grippers 21, 22 in the longitudinal direction with openings 212, 222 arranged in the same orientation (see Figs. 4 to 9). 3 or 4 sets of tool racks 2 are arranged, oriented such that lining-up directions of grippers 21, 22 are aligned in a moving direction of the magazine arm 34 (right-left direction), and 3 rows of tool racks 2 (3 sets for the lowest and middle rows, and 4 sets for the uppermost row) are fixed to the frame 12 on a front face side of the tool magazine 1 and 3 rows of tool racks 2 (4 sets for all rows) are fixed to the frame 12 on the back face side, with the grippers 21, 22 facing each other. In the example, 3 types of tool racks 2 are used, different types for different rows.

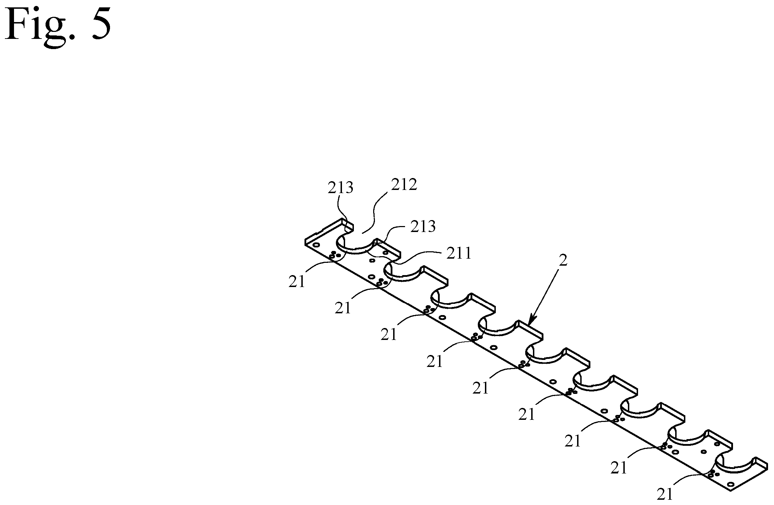

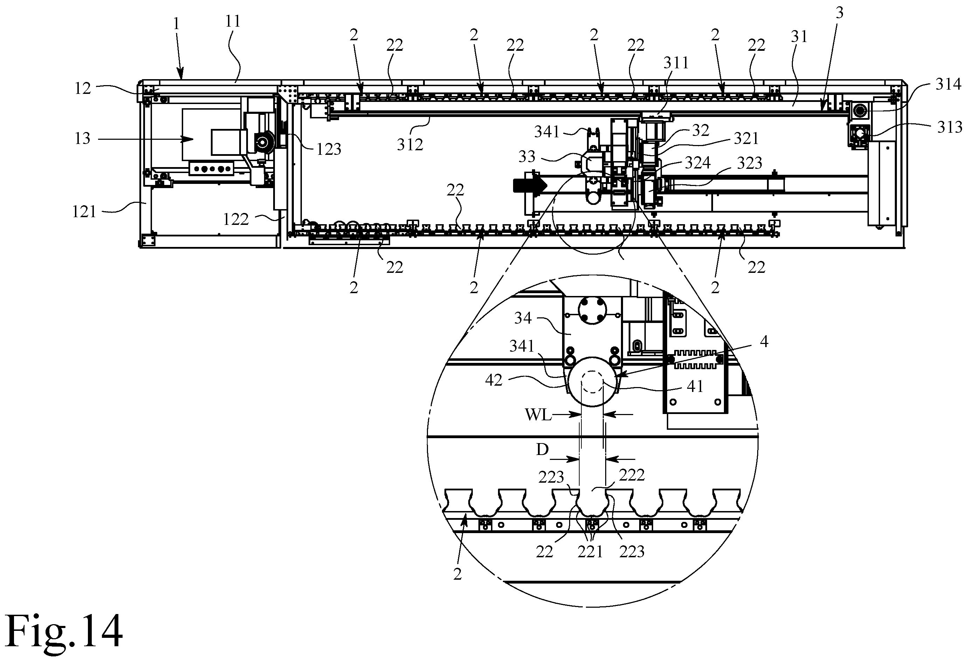

As can be seen in Fig. 4 and Fig. 5, the tool grippers on the lowest row are configured such that circular-ring-shaped grippers 21 are arranged. The circular-ring-shaped gripper 21 has a tapered continuous inner circumferential edge 211 in which a lower face circumferential edge is shorter than a top face circumferential edge. The continuous inner circumferential edge 211 comes into surface contact with a conical side surface of the holder 41 continuously in the circumferential direction. Further, the circular-ring-shaped gripper 21 is provided with an opening 212 that is smaller than the diameter immediately below the flange 411 of the holder 41 of the tool 4 on the continuous inner circumferential edge 211 (see Fig. 14 below). Engagement portions 213 are corner portions (contacting portions) on ends of the continuous inner circumferential edge 211 across the opening 212 and beyond a half turn of a horizontal section of the holder 41.

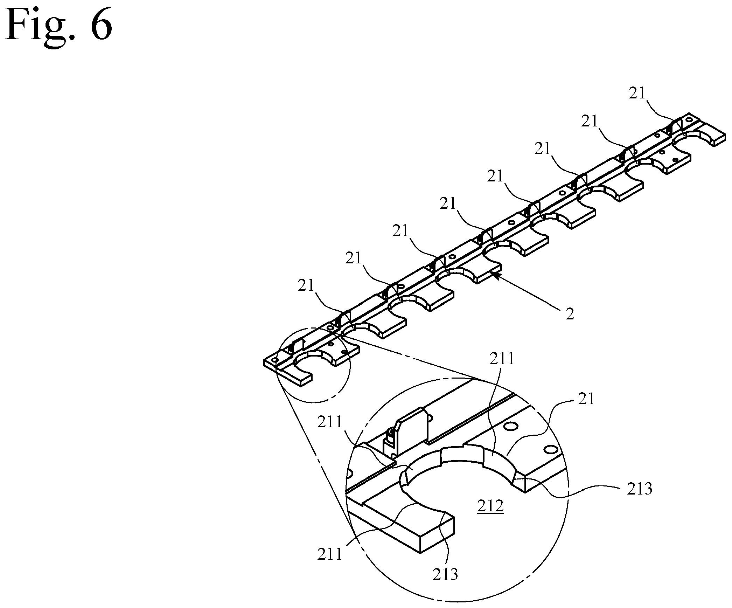

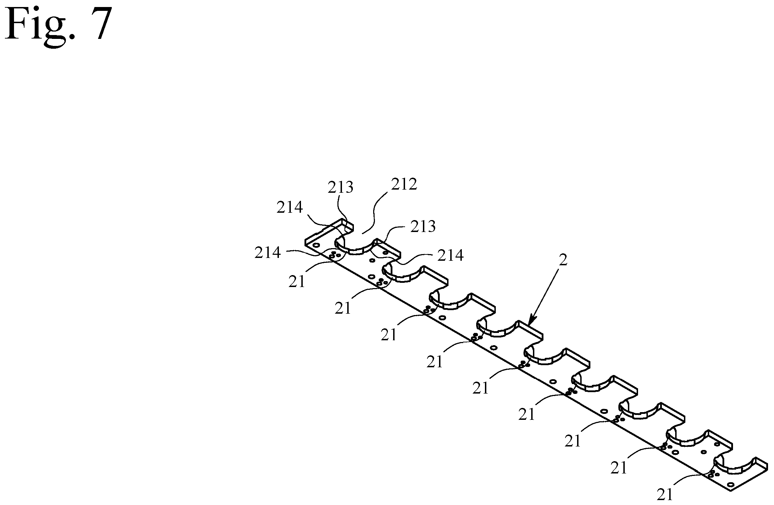

As can be seen in Fig. 6 and Fig. 7, the tool grippers on the middle row are configured such that circular-ring-shaped grippers 21 are arranged. The circular-ring-shaped gripper 21 has a tapered discontinuous inner circumferential edge 214 in which a lower face circumferential edge is shorter than a top face circumferential edge. The discontinuous inner circumferential edge 214 comes into surface contact with a conical side surface of the holder 41 discontinuously in the circumferential direction. Further, the circular-ring-shaped gripper 21 is provided with an opening 212 that is smaller than the diameter immediately below the flange 411 of the holder 41 of the tool 4 on the discontinuous inner circumferential edge 214 (see Fig. 14 below). Engagement portions 213 are corner portions (contacting portions) on ends of the discontinuous inner circumferential edge 214 across the opening 212 and beyond a half turn of a horizontal section of the holder 41.

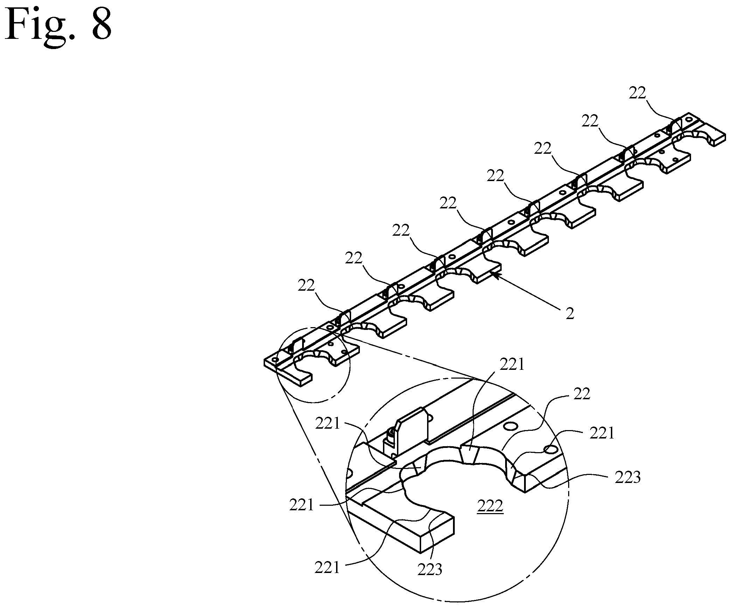

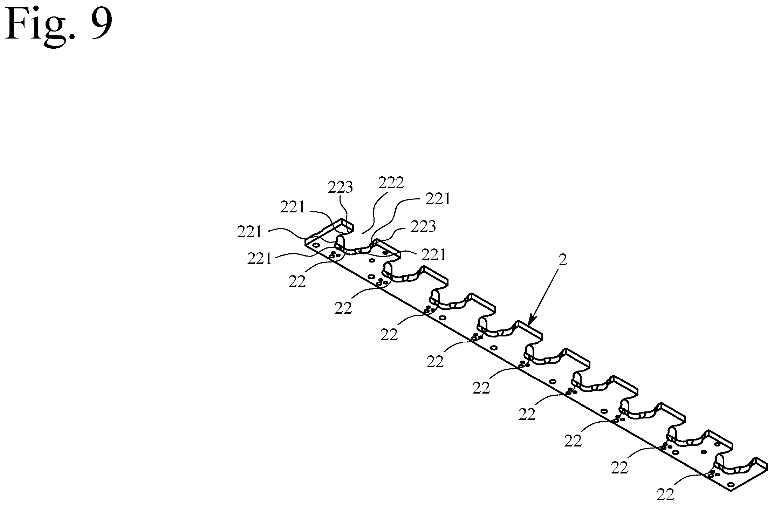

As can be seen in Fig. 8 and Fig. 9, the tool grippers on the uppermost row are configured such that hexagonal grippers 22 are arranged. The hexagonal gripper 22 has a tapered discontinuous inner circumferential edge 221 in which a lower face circumferential edge is shorter than a top face circumferential edge. The discontinuous inner circumferential edge 221 comes into surface contact with a conical side surface of the holder 41 only in the middle of the sides discontinuously in the circumferential direction. Further, the hexagonal gripper 22 is provided with an opening 212 that is smaller than the diameter immediately below the flange 411 of the holder 41 of the tool 4 on the discontinuous inner circumferential edge 221 (see Fig. 14 below). Engagement portions 223 are corner portions (contacting portions) on ends of the discontinuous inner circumferential edge 221 across the opening 212 and beyond a half turn of a horizontal section of the holder 41.

In the tool magazine 1 of the example, a delivery rack 15 that has a circular-ring-shaped gripper 151 according to the same specifications as the tool rack 2 is provided on the frame 12 inside the magazine-side door 111. The delivery rack 15 of the example has 3 grippers 151 for holding a tool 4 with a larger holder 41 and 3 grippers 151 for holding a tool 4 with a smaller holder 41. The delivery rack 15 also stores an adaptor (not illustrated) for use in shape measurement of the tool 4 with a smaller holder 41 on the presetter 13.

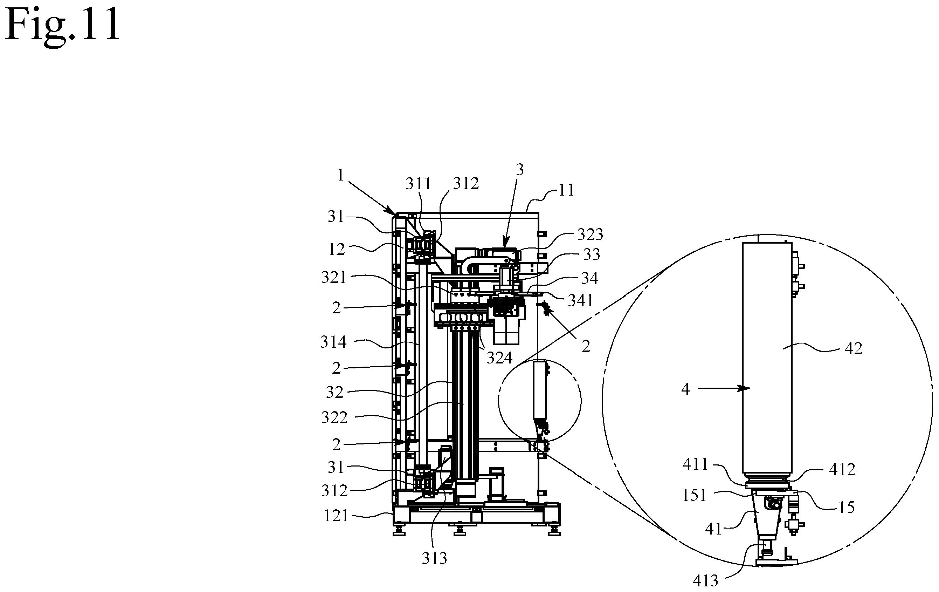

The usage of the tool magazine 1 of the example will now be described taking storage of the tools 4 as an example. First, as can be seen in Fig. 10 and Fig. 11, when the magazine-side door 111 is opened, the tools 4 are held by fitting the holders 41 from above into the grippers 151 of the delivery racks 15 while the tools 4 assume the posture of keeping the cutting part 42 standing and facing-upward with pull studs 413 protruding downward. Considering shape measurement on the presetter 13, the tools 4 are held by the grippers 151 with the orientation of the holders 41 in the horizontal direction being aligned in a specific direction. Started after the magazine-side door 111 is closed, the operation unit 14 causes a sensor (not illustrated) arranged for each of the grippers 151 to read identification information (for example, 2-dimensional barcode) applied to the holders 41, automatically recognizes that the tools 4 are held by the grippers 151 corresponding to the sensors from which the identification information is read as well as the size of the tools 4, and causes the conveying mechanism 3 to start conveying the tools 14.

The magazine arm 34 is moved to the delivery rack 15 by the moving means and the elevator means, turned the hand 341 adjusted to the size of the tool 4 toward the delivery rack 15 by the turning means, advanced by the approaching and leaving means to insert the hand 341 into the V-shaped groove 412 on the flange 411 of the holder 41, and closes the hand 341 to grip the tool 4. The magazine arm 34 is then raised slightly by the elevator means, retracted by the approaching and leaving means to take out the tool 4 from the delivery rack 15 while the tool 4 assumes the posture of keeping the cutting part 42 standing and facing upward.

When the tool 4 is to be subjected to shape measurement by the presetter 13, the magazine arm 34 causes the turning means to turn the hand 341 to the left where the presetter 13 is located, and the moving means and the elevator means to carry the tool 4 to the presetter 13 through the partition-opening-and-closing door 123 that is opened. When the holder 41 of the tool 4 is smaller, the adaptor is carried to the presetter 13 in advance. Shape data of the cutting part 42 of the tool 4 measured by the presetter 13 is registered with a database for management in association with the tools 4 stored in the tool rack 2 and used for the machine tool that uses the tool 4, for example.

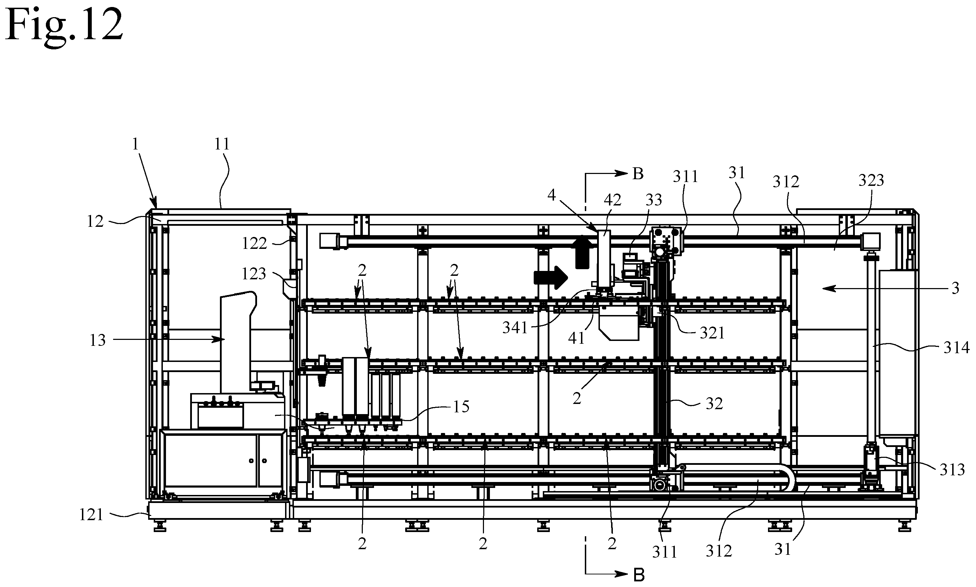

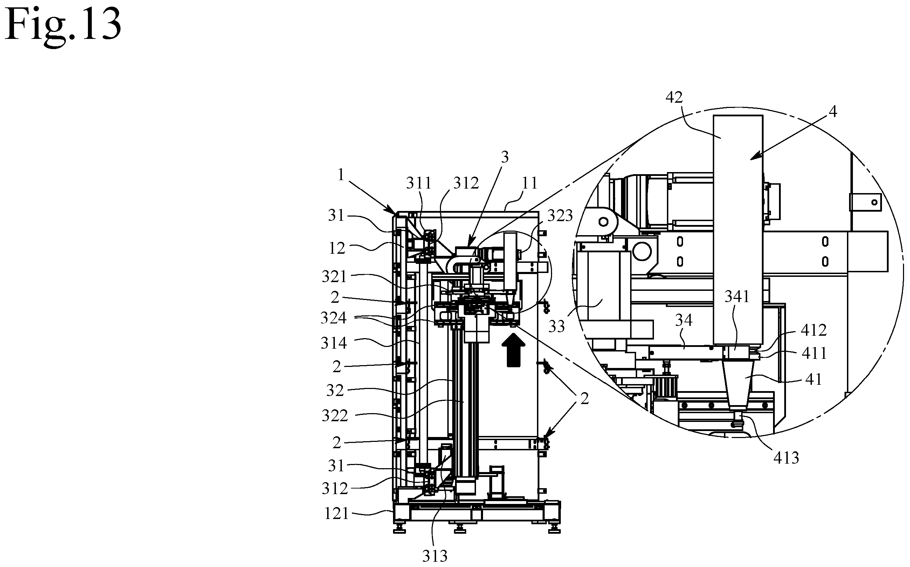

The magazine arm 34 causes the turning means to orient the tool 4 subjected to the shape measurement on the presetter 13 or the tool 4 taken out from the delivery rack 15 to, for example, the front face side, and thereafter, as can be seen in Figs. 12 to 14, causes the moving means and the elevator means to convey the tool 4 near a specific gripper 22 of the tool rack 2 (in the example, the tool rack 2 in the uppermost row on the front face side) for storing the tool 4. At this time, the tool 4 is located at a slightly higher position than the gripper 22 of the tool rack 2, and a diameter WL of the holder 41 at the same height as the top face of the tool rack 2 is smaller than a width D of the opening 222 of the gripper 22 between a pair of engagement portions 223 that are beyond a half turn of a horizontal section of the holder 41 (see a magnified portion in Fig. 14).

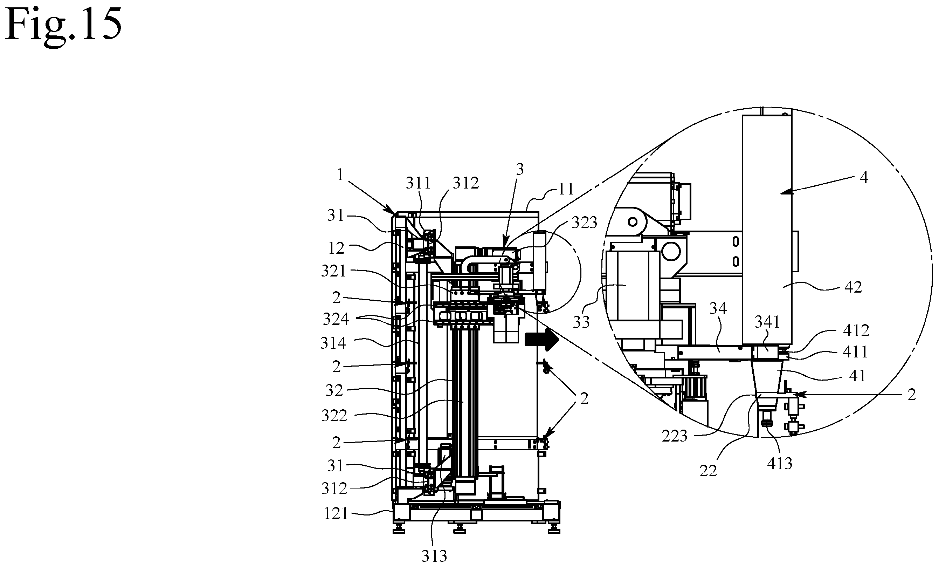

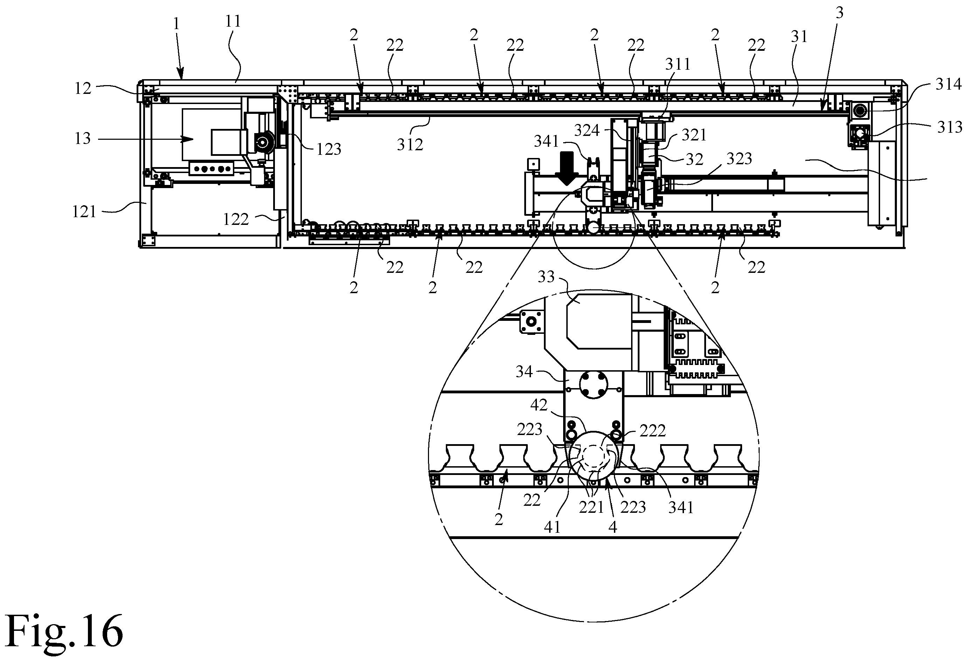

As can be seen in Fig. 15 and Fig. 16, the magazine arm 34 that has conveyed the tool 4 near the specific gripper 22, causes the approaching and leaving means to advance the tool 4 toward the tool rack 2 so that the center of the gripper 22 and the center of the tool 4 coincide. Since the tool 4 still keeps a slightly higher position than the gripper 22, the discontinuous inner circumferential edge 221 of the gripper 22 is not in surface contact with the conical side surface of the holder 41 (see a magnified [[drawing]] portion in Fig. 16). The tool 4 at this phase is still gripped by the hand 341 of the magazine arm 34 assuming the posture of keeping the cutting part 42 standing and facing upward.

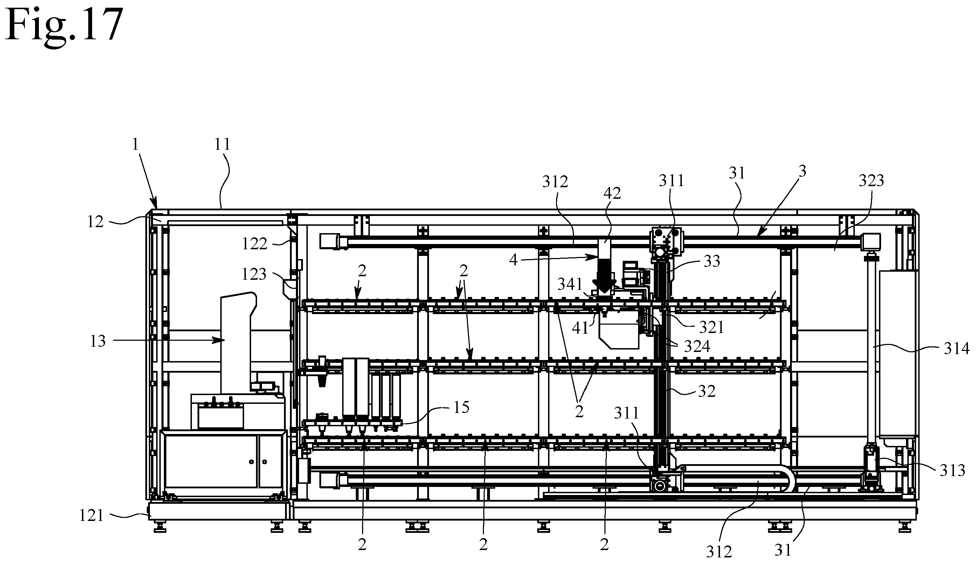

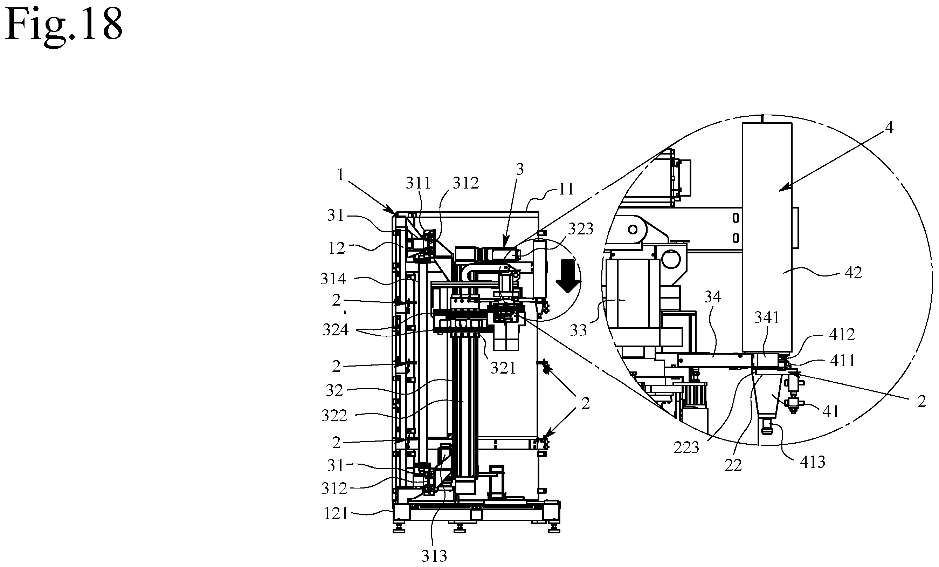

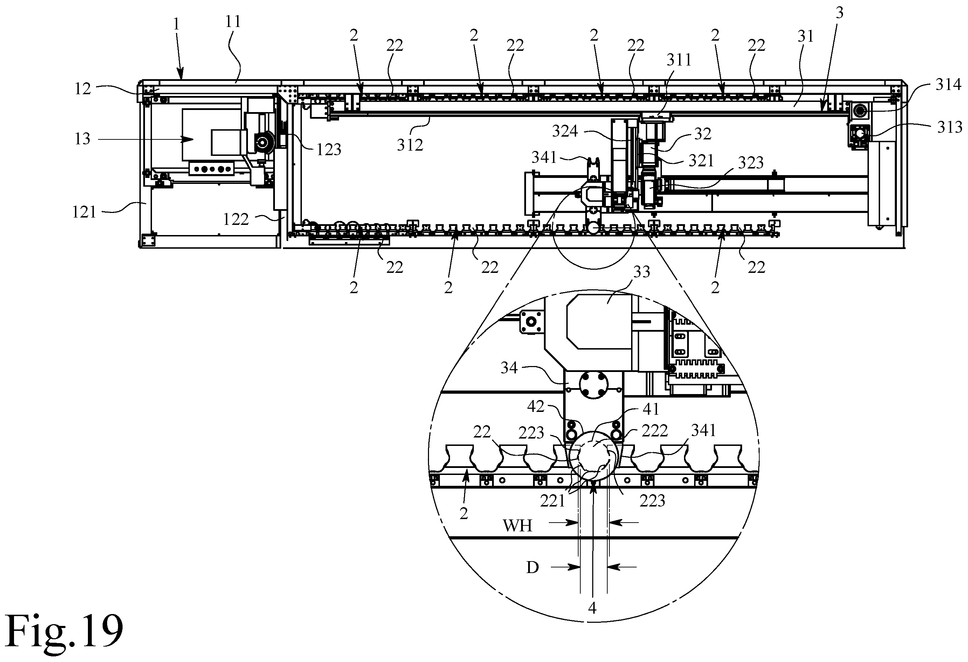

As can be seen in Figs. 17 to 19, the magazine arm 34, when the center of the gripper 22 and the center of the tool 4 coincide, is lowered by the elevator means to bring the conical side surface of the holder 41 into surface contact with the discontinuous inner circumferential edge 221 of the gripper 22. At this time, a diameter WH of the holder 41 at the same height as the top face of the tool rack 2 is larger than the width D of the opening 222 of the gripper 22 between the pair of engagement portions 223 that are beyond a half turn of a horizontal section of the holder 41 (see a magnified [[drawing]] portion in Fig. 19).As a result, the tool 4 is in a state in which the holder 41 is fitted into the gripper 22 from above so that the pair of engagement portions 223 engage with the holder 41, preventing the holder 41 from escaping.

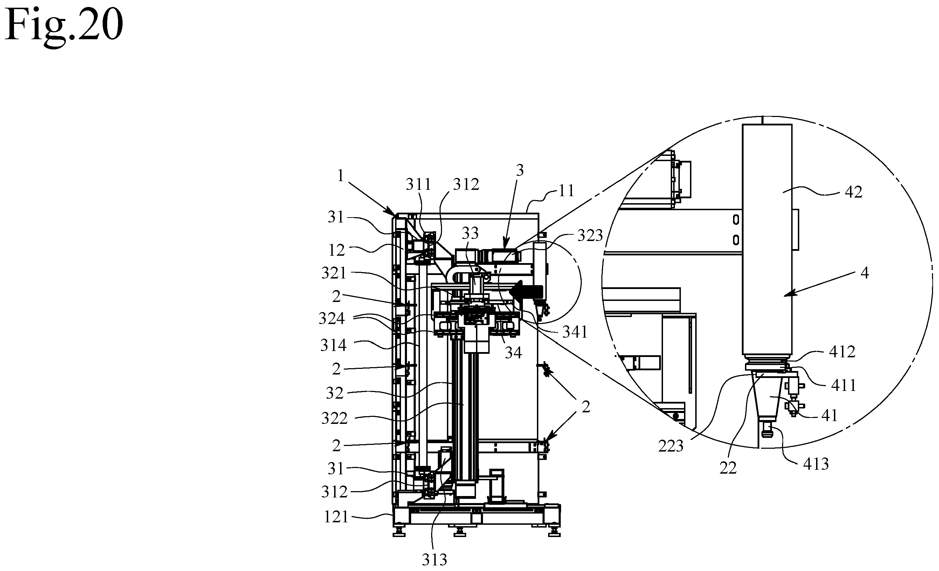

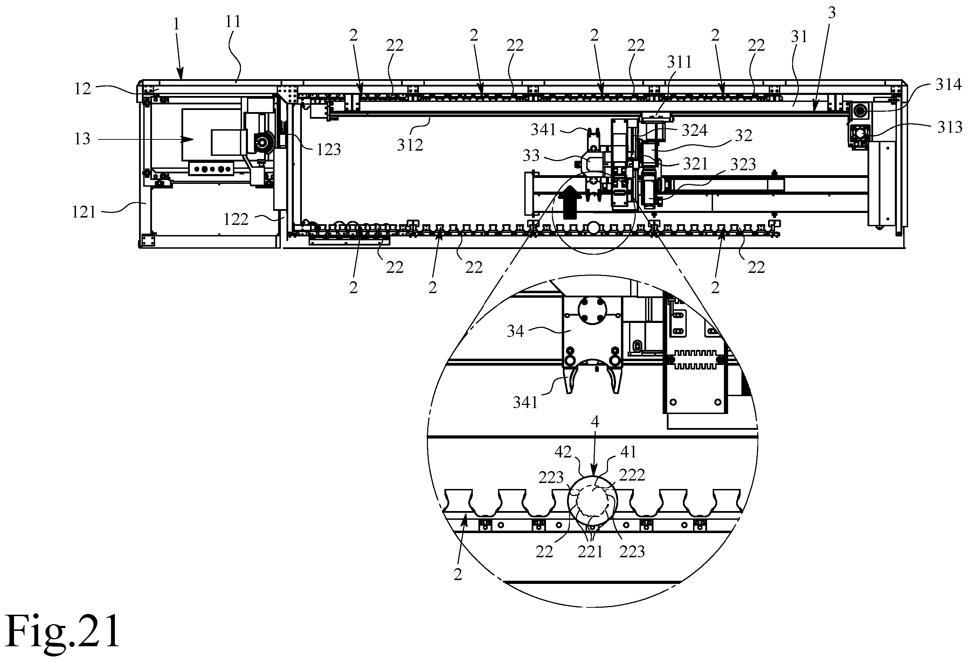

After the holder 41 is thus fitted into the gripper 22 of the tool rack 2, as can be seen in Fig. 20 and Fig. 21, the magazine arm 34 opens the hand 341 and is retracted by the approaching and leaving means to release the tool 4. The tool 4 is fitted into the gripper 22 of the tool rack 2 assuming the posture of keeping the cutting part 42 standing and facing upward and held with the holder 41 engaged with the engagement portion 223, so that the tool 4 will not drop off. The tool magazine 1 of the example is provided with observation windows 114 along the tool rack 2, and therefore, it is easy to view the cutting part 42 of the tool 4 assuming the posture of keeping the cutting part 42 standing and facing upward.

A procedure to take out the tool 4 is the same as that to store the tool 4 as described above but reversed. After the magazine arm 34 is advanced by the approaching and leaving means and causes the hand 341 to grip the tool 4, the magazine arm 34 is raised by the elevator means to a height at which the holder 41 will not interfere with the engagement portion 223, and retracted by the approaching and leaving means to leave the tool 4 away from the gripper 22. Then, the moving means and the elevator means are caused to convey the tool 4 to the delivery rack 15, and thereafter, the tool 4 is fitted and held in the gripper 151 of the delivery rack 15. The magazine-side door 111 is opened, and the tool 4 thus conveyed to the delivery rack 15 is taken out.

The tool magazine 1 of the present disclosure keeps the tool 4 assuming the posture of keeping the cutting part 42 standing and facing upward while the tool 4 is stored and taken out, so that the cutting part 42 will be prevented from dropping off. Further, the tool 4 held by the gripper 22 of the tool rack 2 allows the engagement portion 223 to engage with the holder 41, so that the tool 4 will be prevented from escaping from the gripper 22. The tool 4 held by the gripper 22 of the tool rack 2 is easy to view in the cutting part 42 facing upward through the observation windows 114, enabling observation of the presence and state of the storage from the outside. In addition, the tool 4 assuming the posture of keeping the cutting part 42 standing and facing upward can be delivered to and from the presetter 13 as it is, which provides convenience of linking the tool magazine 1 and the presetter 13.

Only movement required for the magazine arm 34 to store and take out the tool 4 to and from the gripper 22 of the tool rack 2 is a slight up-down and approaching and leaving of the tool 4 with respect to the tool rack 2. Accordingly, a plurality of tool racks 2, each of which is configured such that it has a plurality of grippers 21, 22, can be arranged in the horizontal direction and the up-down direction in a paired positional relationship with the magazine arm 34 located in between. This makes it possible to store a number of tools in a small installation area as the tool magazine 1 in its entirety. Further, the movement for the magazine arm 34 to store and take out the tool 4 to and from the tool rack 2 is small, so that the requirement of taking out an intended tool 4 quickly can be met.

### [Reference Signs List]

1 tool magazine
11 exterior cover plate
111 magazine-side door
112 presetter-side door
113 maintenance door
114 observation window
12 frame
121 base
122 partition
123 partition-opening-and-closing door
13 presetter
14 operation unit
141 universal arm
15 delivery rack
151 circular-ring-shaped gripper
2 tool rack
21 circular-ring-shaped gripper
211 continuous inner circumferential edge
212 opening
213 engagement portion
214 discontinuous inner circumferential edge
22 hexagonal gripper
221 discontinuous inner circumferential edge
222 opening
223 engagement portion
3 conveying mechanism
31 movement rail
311 movement block
312 movement timing belt
313 movement servomotor
314 transmission shaft
32 elevator rail
321 elevator block
322 elevator timing belt
323 elevator servomotor
324 sliders
33 approaching and leaving block
34 magazine arm
341 hand
4 tool
41 holder
411 flange
412 V-shaped groove
413 pull stud
42 cutting part

## Claims

1. A tool magazine (1) comprising: a tool rack (2) for holding a tool (4) with a cutting part (42) mounted in a conical holder (41); and a magazine arm (34) configured to delivery the tool (4) to and from the tool rack (2), wherein
the tool rack (2) includes a gripper (21) into which the holder (41) for the tool (4) that keeps the cutting part (42) standing and facing upward is to be fitted from above,
the gripper (21) has a ring-shaped inner circumferential edge that has an opening (212) in an approaching and leaving direction of the tool (4) moved by the magazine arm (34), a pair of engagement portions (223) are arranged on opposite ends of the inner circumferential edge and beyond a half turn of a horizontal section of the holder (41), and
the magazine arm (34) includes: a hand (341) configured to grip the holder (41) for the tool (4) that keeps the cutting part (42) standing and facing upward in a horizontal direction; approaching and leaving means configured to cause the hand (341) to approach the gripper (21) and leave therefrom; and elevator means configured to move the hand (341) up and down.

2. The tool magazine (1) according to claim 1, wherein a pair of the tool racks (2) are arranged with the magazine arm (34) located in between such that openings (212, 222) of the grippers (21, 22) of the respective tool racks (2) face each other, and the magazine arm (34) includes turning means configured to turn the hand (341) toward each of the grippers (21, 22) of the tool racks (2).

3. The tool magazine (1) according to any one of claims 1 and 2, wherein the tool rack (2)has a plurality of grippers (21, 22) with openings (212, 222) thereof arranged in the same orientation, the magazine arm (34) includes moving means configured to move the hand (341) in a lining-up direction of the grippers (21, 22).

4. The tool magazine (1) according to any one of claims 1 to 3, wherein a plurality of the tool racks (2) are arranged in a horizontal direction with the openings (212, 222) of the grippers (21, 22) arranged in the same orientation, and the magazine arm (34) includes moving means configured to move the hand (341) in an arrangement direction of the tool racks (2).

5. The tool magazine (1) according to any one of claims 1 to 4, wherein a plurality of the tool racks (2) are arranged and spaced apart in an up-down direction with the openings (212, 222) of the grippers (21, 22) arranged in the same orientation, and the magazine arm (34) includes elevator means configured to move the hand (341) up and down in an arrangement direction of the tool racks (2).

## Patentansprüche

1. Ein Werkzeugmagazin (1), umfassend:
einen Werkzeughalter (2) zum Halten eines Werkzeugs (4) mit einem in einem Kegelhalter (41) montierten Schneidteil (42); und einen Magazinarm (34), der so konfiguriert ist, dass er das Werkzeug (4) zu und von dem Werkzeughalter (2) befördert,
wobei
der Werkzeughalter (2) einen Greifer (21) umfasst, in den der Halter (41) für das Werkzeug (4), der das Schneidteil (42) aufrecht stehend und nach oben gerichtet hält, von oben eingesetzt werden soll,
wobei der Greifer (21) einen ringförmigen inneren Umfangsrand aufweist, der in Bewegungsrichtung des Werkzeugs (4), das durch den Magazinarm (34) bewegt wird, eine Öffnung (212) besitzt, wobei an gegenüberliegenden Enden des inneren Umfangsrands ein Paar Eingriffselemente (223) angeordnet ist, die über eine halbe Umdrehung eines horizontalen Abschnitts des Halters (41) hinausragen, und
wobei der Magazinarm (34) Folgendes umfasst:
eine Hand (341), die so konfiguriert ist, dass sie den Halter (41) für das Werkzeug (4), der das Schneidteil (42) aufrecht stehend und nach oben gerichtet hält, in horizontaler Richtung greift;
Annäherungs- und Absetzvorrichtungen, die so konfiguriert sind, dass die Hand (341) an den Greifer (21) herangeführt und von diesem wegbewegt wird; und Hebevorrichtungen, die so konfiguriert sind, dass die Hand (341) auf- und abwärts bewegt wird.

2. Das Werkzeugmagazin (1) gemäß Anspruch 1, wobei ein Paar der Werkzeughalter (2) derart angeordnet ist, dass sich der Magazinarm (34) zwischen ihnen befindet, sodass sich die Öffnungen (212, 222) der Greifer (21, 22) der jeweiligen Werkzeughalter (2) einander gegenüberstehen, und
wobei der Magazinarm (34) Wendevorrichtungen umfasst, die so konfiguriert sind, dass die Hand (341) zu jedem der Greifer (21, 22) der Werkzeughalter (2) gedreht werden kann.

3. Das Werkzeugmagazin (1) gemäß einem der Ansprüche 1 und 2, wobei der Werkzeughalter (2) eine Mehrzahl von Greifern (21, 22) aufweist, deren Öffnungen (212, 222) in derselben Orientierung angeordnet sind, und wobei der Magazinarm (34) Bewegungsvorrichtungen umfasst, die so konfiguriert sind, dass die Hand (341) in einer Ausrichtungsrichtung der Greifer (21, 22) bewegt werden kann.

4. Das Werkzeugmagazin (1) gemäß einem der Ansprüche 1 bis 3, wobei eine Mehrzahl der Werkzeughalter (2) in horizontaler Richtung angeordnet ist, wobei die Öffnungen (212, 222) der Greifer (21, 22) in derselben Orientierung angeordnet sind, und
wobei der Magazinarm (34) Bewegungsvorrichtungen umfasst, die so konfiguriert sind, dass die Hand (341) in einer Anordnungsrichtung der Werkzeughalter (2) bewegt werden kann.

5. Das Werkzeugmagazin (1) gemäß einem der Ansprüche 1 bis 4, wobei eine Mehrzahl der Werkzeughalter (2) in vertikaler Richtung angeordnet und voneinander abgesetzt ist, wobei die Öffnungen (212, 222) der Greifer (21, 22) in derselben Orientierung angeordnet sind, und
wobei der Magazinarm (34) Hebevorrichtungen umfasst, die so konfiguriert sind, dass die Hand (341) in Auf- und Abwärtsrichtung in einer Anordnungsrichtung der Werkzeughalter (2) bewegt werden kann.

## Revendications

1. Un magasin d'outils (1), comprenant :
un support à outils (2) destiné à recevoir un outil (4) avec une partie de coupe (42) montée dans un porte-outil conique (41) ; et
un bras de magasin (34) configuré pour délivrer l'outil (4) vers et depuis le support à outils (2),
dans lequel
le support à outils (2) comprend une pince (21) dans laquelle le porte-outil (41) pour l'outil (4), qui maintient la partie de coupe (42) dressée et orientée vers le haut, doit être inséré par le haut,
la pince (21) possède un bord circonférentiel intérieur en forme d'anneau qui comprend une ouverture (212) dans la direction d'approche et d'éloignement de l'outil (4) déplacé par le bras de magasin (34), une paire de parties d'engagement (223) étant disposée aux extrémités opposées du bord circonférentiel intérieur et dépassant d'un demi-tour d'une section horizontale du porte-outil (41) ; et
le bras de magasin (34) comprend :
une main (341) configurée pour saisir le porte-outil (41) de l'outil (4), qui maintient la partie de coupe (42) dressée et orientée vers le haut dans une direction horizontale ;
des moyens d'approche et d'éloignement configurés pour amener la main (341) vers la pince (21) et l'en éloigner ; et
des moyens d'élévation configurés pour déplacer la main (341) de haut en bas.

2. Le magasin d'outils (1) selon la revendication 1, dans lequel
une paire de supports à outils (2) est disposée avec le bras de magasin (34) situé entre eux, de sorte que les ouvertures (212, 222) des pinces (21, 22) desdits supports à outils (2) se font face, et
le bras de magasin (34) comprend des moyens de rotation configurés pour tourner la main (341) vers chacune des pinces (21, 22) des supports à outils (2).

3. Le magasin d'outils (1) selon l'une quelconque des revendications 1 et 2, dans lequel
le support à outils (2) comporte une pluralité de pinces (21, 22) dont les ouvertures (212, 222) sont disposées dans la même orientation, et
le bras de magasin (34) comprend des moyens de déplacement configurés pour déplacer la main (341) dans une direction d'alignement des pinces (21, 22).

4. Le magasin d'outils (1) selon l'une quelconque des revendications 1 à 3, dans lequel
une pluralité de supports à outils (2) est disposée dans une direction horizontale avec les ouvertures (212, 222) des pinces (21, 22) disposées dans la même orientation, et
le bras de magasin (34) comprend des moyens de déplacement configurés pour déplacer la main (341) dans une direction de disposition des supports à outils (2).

5. Le magasin d'outils (1) selon l'une quelconque des revendications 1 à 4, dans lequel
une pluralité de supports à outils (2) est disposée et espacée dans une direction verticale avec les ouvertures (212, 222) des pinces (21, 22) disposées dans la même orientation, et
le bras de magasin (34) comprend des moyens d'élévation configurés pour déplacer la main (341) de haut en bas dans une direction de disposition des supports à outils (2).
